Europäisches Patentamt

(19) European Patent Office

Office européen des brevets

(11) Numéro de publication: **0 121 460 B1**

(12) **FASCICULE DE BREVET EUROPEEN**

(45) Date de publication du fascicule du brevet:
**19.11.87**

(21) Numéro de dépôt: **84400486.1**

(22) Date de dépôt: **09.03.84**

(51) Int. Cl.⁴: **G 02 B 6/28, C 03 B 37/16**

(54) Pièce de réception à fibre optique pour dispositif de couplage et procédé de réalisation d'un tel dispositif.

(30) Priorité: **09.03.83 FR 8303874**

(43) Date de publication de la demande:
**10.10.84 Bulletin 84/41**

(45) Mention de la délivrance du brevet:
**19.11.87 Bulletin 87/47**

(84) Etats contractants désignés:
**DE GB IT NL SE**

(56) Documents cités:
**EP - A - 0 038 023**
**DE - A - 2 942 664**

**ELECTRONICS LETTERS, vol. 15, no. 23, novembre 1979, pages 737-738, Hitchin, Herts, GB E. WEIDEL et al.: "Tee-coupler for single-mode fibres"**

(73) Titulaire: **Le Noane, Georges, Kerrougant Bras, F-22730 Tregastel (FR)**
Titulaire: **Boscher, Daniel, Résidence "Les Huniers", F-22700 Perros Guirec (FR)**
Titulaire: **Lemarer, René, Kerougan Bras, F-22700 Tregastel (FR)**

(72) Inventeur: **Le Noane, Georges, Kerrougant Bras, F-22730 Tregastel (FR)**
Inventeur: **Boscher, Daniel, Résidence "Les Huniers", F-22700 Perros Guirec (FR)**
Inventeur: **Lemarer, René, Kerougan Bras, F-22700 Tregastel (FR)**

(74) Mandataire: **Fort, Jacques et al, CABINET PLASSERAUD 84, rue d'Amsterdam, F-75009 Paris (FR)**

## Description

L'invention concerne les dispositifs de couplage de fibres optiques utilisables notamment pour constituer des systèmes de transmission sur fibres optiques.

Il existe à l'heure actuelle des perspectives d'utilisation de systèmes de transmission sur fibres optiques qui impliquent de disposer de coupleurs permettant de remplir diverses fonctions, en particulier de raccorder des systèmes à N branches vers des systèmes à N branches ou P branches (N et P étant des entiers). Il faut, de plus, que les dispositifs de couplage, qui seront nécessaires à des millions d'exemplaires, soient simples, reproductibles, robustes, peu coûteux et faciles à mettre en œuvre sans exiger des micro-manipulations d'ajustage. Il est de plus souhaitable qu'ils présentent une grande souplesse d'adaptation et une possibilité d'intégration de composants optoélectroniques. Enfin, il est souhaitable que l'encombrement soit faible pour faciliter leur intégration dans un ensemble.

Les dispositifs de couplage existant actuellement ne répondent que très imparfaitement à ces exigences. On connaît notamment (EP-A-00 38 023) un dispositif associant deux pièces monobloc de réception de fibre optique. Chaque pièce monobloc est du type comportant une rainure convexe de réception de fibre, ménagée dans une première face de la pièce, dans un premier plan de symétrie. La pièce décrite dans le document EP-A-0 038023 est en quartz ou en silicium. Elle doit être usinée, ce qui rend son coût prohibitif et ne permet pas d'arriver à une précision de localisation suffisante pour autoriser la mise en place en aveugle et sans tâtonnement. On ne peut pas utiliser diréctement les surfaces exterieures de la piece comme surfaces de référence car, dans la pratique, on ne peut pas positionner par montage une surface de grande dimension avec suffisamment de précision par rapport au fond de la rainure.

L'invention vise à fournir un dispositif de couplage répondant mieux que ceux antérieurement connus aux exigences de la pratique, notamment en ce qu'il utilise un composant de base constitué par une pièce monobloc de coût faible, réalisable par des procédés industriels, de grande souplesse d'utilisation et assurant une précision de mise en place satisfaisante.

Dans ce but, l'invention propose notamment une pièce de réception de fibre optique pour dispositif de couplage, conforme à la revendication 1.

On voit que la pièce suivant l'invention utilise une surface de référence qui peut être de petite dimension, qui est située à proximité immédiate de l'emplacement de la pièce où va s'effectuer le couplage entre deux tronçons de fibre. Du fait que les distances verticale et horizontale entre la surface de référence localisée et le fond de la rainure au milieu de cette dernière sont très faibles, on peut atteindre la précision nécessaire par moulage, c'est-à-dire par une technique simple.

La pièce est avantageusement fabriquée par moulage de résine à faible retrait (résine métacrylate bi-composant par exemple) chargée en silice, de grande dureté. La teneur en silice sera généralement de l'ordre de 80% et la granulométrie peut être de l'ordre de 10 μm.

La séconde surface de référence peut notamment être constituée par le fond d'une encoche prévue dans la première surface de la pièce, à proximité de la zone centrale de la rainure, zone dans laquelle sera retenue la fibre optique. La rainure aura avantageusement un profil en V, permettant une localisation précise de la fibre.

Deux faces de référence supplémentaires sont symétriques l'une de l'autre par rapport au second plan de symétrie, transversal à la rainure. Une face de la pièce opposée à celle dans laquelle est pratiquée la rainure servira également de référence d'orientation de la pièce. Par contre, dans la plupart des cas, sa distance à la rainure n'aura pas à être définie avec un degré de précision élevé.

La pièce qui vient d'être définie est d'utilisation très souple et, en particulier, elle permet de réaliser indifféremment un coupleur à deux branches et un coupleur de deux vers un.

Dans un premier procédé de réalisation d'un dispositif de couplage, la pièce de réception, préalablement munie d'une fibre, est coupée en deux moitiés qui sont ensuite mises en vis-à-vis, réalisant ainsi une restitution par apairage. L'ensemble ainsi réalisé présenté une face frontale avec deux tronçons de fibre parfaitement référencés: à cette face peut être adjoint un dispositif de centrage qui recevra directement l'embout de connecteur de liaison avec une ligne optique. On réalise ainsi un coupleur à deux branches.

On peut également réaliser un coupleur à quatre branches en accolant deux pièces de réception portant des tronçons de fibre optique, après découpe de la partie haute des pièces suivant un plan perpendiculaire aux deux plans de symétrie de la pièce, de façon à assurer un bon contact entre les fibres. Enfin, les pièces ou deux demi-pièces accolées peuvent être mises en place dans un boîtier de constitution simple.

Quel que soit le mode d'exécution adopté, on constitue ainsi un composant disposant d'au moins une sortie optique et pouvant avoir une ou plusieurs sorties électriques, lorsque des éléments optoélectroniques sont placés sur la pièce (qui peut être munie de dispositif de centrage assurant leur mise en place précise). Un tel composant est aisément intégrable à une ligne complète de transmission par fibre optique et trouve de nombreuses applications, notamment dans les systèmes de télécommunication, qui peuvent véhiculer des services très divers, tels que télématique, télévision et visiophone. L'invention trouve même un intérêt tout particulier dans ce dernier cas, car elle permet de séparer aisément la fonction télématique de la fonction télévision et visiophone afin d'obtenir un réseau modulaire et évolutif.

L'invention sera mieux comprise à la lecture de la description qui suit de modes particuliers d'exécution de l'invention, donnés à titre d'exemples non limitatifs. La description se réfère aux dessins qui l'accompagnent, dans lesquels:

- la Figure 1 est une vue en perspective d'une pièce moulée de réception de fibre optique suivant un mode particulier de réalisation de l'invention;
- la Figure 2 est une vue de principe montrant l'arasement de la fibre en place dans la pièce par sciage longitudinal perpendiculairement aux deux plans de symétrie;
- la Figure 3 est une vue de principe montrant un dispositif utilisable pour mettre en place et coller la fibre dans la pièce;
- les Figures 4A et 4B sont des schémas, respectivement en élévation et en vue de dessus, montrant les surfaces de référence et les emplacements de sciage au cours de la réalisation d'un dispositif de couplage utilisant une pièce du genre montré en Figure 1;
- les Figures 5A et 5b sont des schémas de principe respectivement en élévation et en bout, montrant un dispositif de couplage obtenu après tronçonnage de la pièce en deux moitiés et mise en vis-à-vis des deux moitiés;
- la Figure 6 est une vue schématique en élévation, montrant un dispositif de couplage de deux fibres obtenu par mise en vis-à-vis de deux pièces qui ont subi uniquement un sciage longitudinal du genre montré en Figure 2;
- les Figures 7A et 7B montrent, respectivement en coupe suivant les lignes A-A et B-B, un dispositif de couplage comportant un boîtier et deux demi-pièces en regard,
- les Figures 8 et 9 sont des schémas de montage en boîtier.

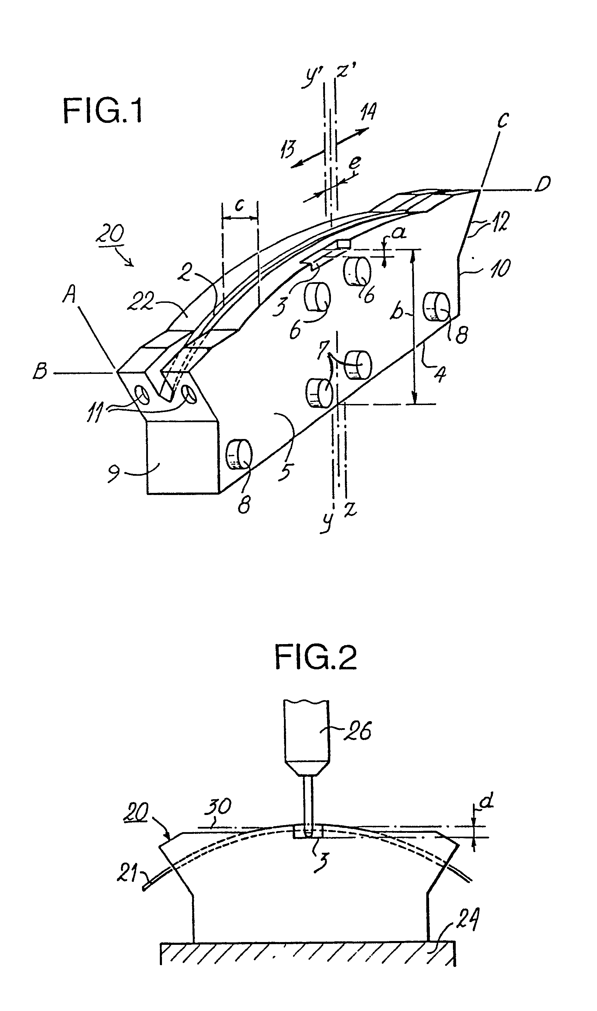

La pièce de base 20 montrée en Figure 1 est prévue pour être fabriquée par moulage d'une résine à faible retrait, éventuellement chargée. On connaît de telles résines (par exemple celle vendue sous la référence «ADAPTIC» par JOHNSON & JOHNSON) dont le retrait ne dépasse pas $0,2 \times 10^{-2}$ et dont la polymérisation est rapide.

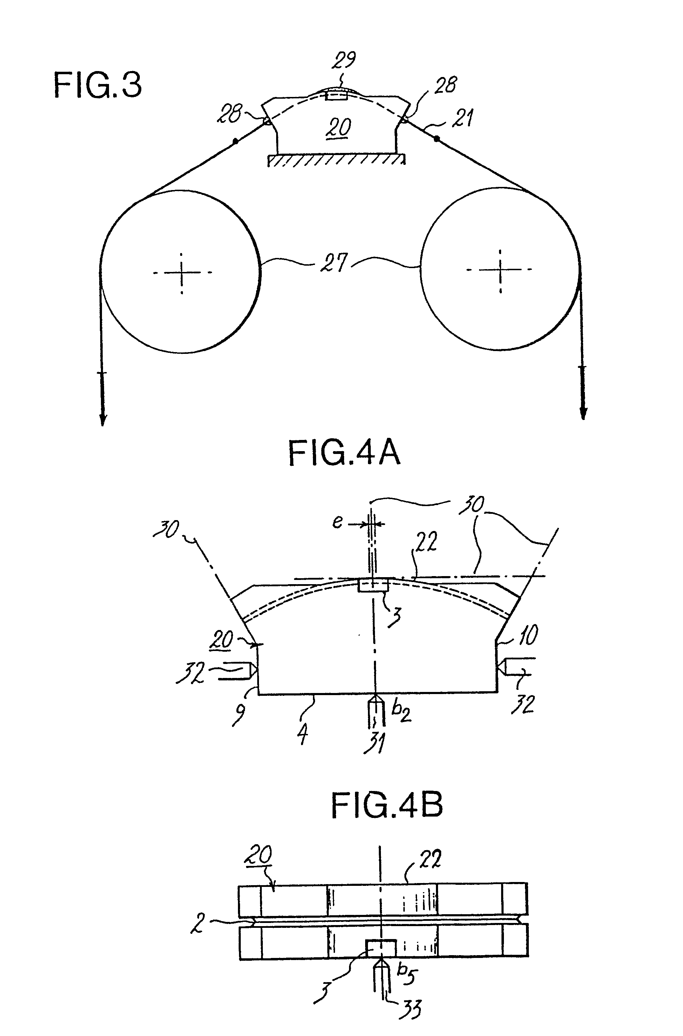

Cette pièce 20 présente un plan de symétrie longitunal et un plan de symétrie tranversal orthogonaux. Une première face de la pièce, symétrique par rapport aux deux plans et qu'on appellera par la suite «face de travail» 22, est destinée à recevoir une fibre 21 à coupler (Figures 2 et 3). Dans cette face de travail 22 est ménagée une rainure en vé 2. La rainure 2, dont l'axe est dans le plan médian (plan de symétrie longitudinal), a, dans la zone proche du plan de symétrie transversal, un rayon de courbure choisi en fonction des caractéristiques de la fibre 21 à coupler (saut ou gradient d'indice, diamètre de cœur, etc.) et des conditions d'injection en cas d'intégration d'un composant optoélectronique (diode laser ou diode électroluminescente) afin d'assurer le couplage et de minimiser l'incidence d'une réflexion dans la seconde branche du coupleur. Les critères de choix de ce rayon sont connus et n'ont donc pas à être donnés ici. Enfin, la qualité du vé (dimension, état de surface, angle) est importante pour garantir un sciage avec un taux de réussite maximum. Une optimisation conduit à adopter, pour une fibre de 125 µm de diamètre extérieur, un vé ayant une hauteur de 200 µm et un angle d'environ 90°. L'emplacement de la rainure 2 doit être défini avec précision par rapport à plusieurs surfaces (ou jeux de surfaces) de référence prévues sur la pièce 20, afin de permettre l'utilisation ultérieure de la pièce dans un dispositif de couplage. Le moulage permet d'arriver à une précision de l'ordre de 1 µm.

Une première surface de référence 3, dont le rôle est essentiel, est prévue perpendiculairement aux deux plans de symétrie et à proximité de la zone centrale de la rainure. Cette proximité et l'utilisation d'une résine à faible retrait permettent de fractionner la pièce et la fibre en deux moitiés par sciage avec une grande précision. Pratiquement, l'emplacement de la fibre 21 par rapport à la surface de la pièce sera reproductible au micron près.

Une seconde surface plane de référence 4, à l'opposé de la face de travail 22, constitue le fond de la pièce. Elle permet de donner à la pièce 20 une orientation correcte dans un montage de sciage comprenant un socle 24, comme on le verra plus loin (Figures 2 à 4). Elle doit être parallèle à la surface 3 mais leur écartement b n'a pas besoin d'être maintenu avec une précision élevée.

Une surface plane latérale 5, qui peut se réduire à trois plots d'appui 6, 7 et 8 sur chaque demi-pièce, doit être parallèle au plan longitudinal de symétrie et située à une distance c de ce dernier. Une bonne précision sur c est obtenue sans difficulté par moulage, du fait de la faible valeur de c, comparée à b. On verra que cette précision est nécessaire pour réaliser un dispositif de couplage à deux branches vers deux, qui implique d'accoupler deux pièces 20 placées en regard. Dans le cas d'un dispositif à deux branches, utilisant les deux moitiés d'une pièce tronçonnée dans le plan transversal de symétrie, la planéité de la surface 5 suffit au contraire à assurer une mise en place satisfaisante.

Enfin, deux surfaces planes 9 et 10 de la pièce, symétriques et perpendiculaires aux surfaces 4 et 5, permettent de définir le plan de symétrie transversal dans lequel doit être sciée la pièce 20 pour constituer un dispositif de couplage à deux branches. Elles peuvent être complétées par des pans obliques munis de cavités 11 et 12 obtenues lors du moulage et destinées à servir de référence de mise en place de composants optoélectroniques. Du fait de la faible distance entre la rainure en vé 2 et les cavités, leur position relative est reproductible avec précision. Les deux surfaces 9 et 10, perpendiculaires aux surfaces 5 et 4, sont utilisées dans le montage de sciage pour effectuer un sciage centré au milieu de la pièce. Ce sciage, représenté par les axes yy' et zz', est effectué par enlèvement d'une quantité minimum de matière correspondant à l'épaisseur d'un disque abrasif, dont l'épaisseur e pourra être de 0,2 mm. Une précision de quelques centièmes de millimètre sur l'emplacement de la coupe est suffisante: elle correspond donc à des techniques de moulage et d'usinage traditionnelles.

On verra que les cavités 11 et 12, dont la production par moulage assure une position déterminée par rapport à la rainure en vé 2 et donc par rapport à la fibre, servent de référence pour insérer, avec une précision suffisante pour obtenir un couplage correct, des composants optoélectroniques tels que, par exemple, une diode électroluminescente et une photodiode. Les surfaces mises en jeu dans de tels composants ne nécessitent pas, pour obtenir un couplage suffisant pour des applications de transmission à bas débit numérique, des précisions draconiennes. Des précisions de l'ordre de quelques μm, voire de quelques 1/100 de mm, sont suffisantes. Au stade industriel de fabrication de tels composants, il est relativement aisé de centrer la partie active du composant par rapport à un dispositif de référence qui viendra s'adapter à la cavité réceptrice du dispositif objet de l'invention.

Les cavités 11 et 12 peuvent également être utilisées, lors du sciage, pour préparer les faces d'extrémité des fibres dans un plan perpendiculaire à l'axe de celles-ci (plan AB et plan CD sur la Figure 1).

Les opérations à effectuer sur la pièce 20 pour mettre en œuvre l'invention seront différentes suivant le type de couplage à réaliser. Dans le cas le plus complexe, ces opérations comporteront:

– un enlèvement de matière dans la pièce 20 et la fibre préalablement fixée sur celle-ci, jusqu'à un plan longitudinal, à une cote prédéterminée par rapport à la surface de référence 3,

– un sciage des faces d'extrémité des tronçons de fibre,
– un sciage de la pièce moulée 20 pour en constituer deux demi-pièces.

L'opération d'abrasion est schématisée en Figure 2. L'abrasion s'effectue à une cote précise d sans difficulté à l'aide d'un disque tournant à grande vitesse. Une touche 26 prenant appui sur la surface de référence 3 et solidaire du bâti supportant le disque permet d'assurer la précision nécessaire. L'état de surface obtenu est proche de celui d'un polissage. Pour obtenir des caractéristiques complètement équivalentes à celles d'une face polie mécaniquement, on introduira un liquide, d'indice supérieur à celui du matériau constitutif de la fibre (silice en général), entre les tronçons de fibre en contact. Ce liquide d'adaptation d'indice pourra notamment être une graisse, une colle ou une huile au silicone.

Le sciage de la fibre 21 pour réaliser deux tronçons ayant des faces d'extrémité acceptables peut s'effectuer sur un montage du genre montré en Figure 3. La fibre 21 est d'abord plaquée au fond de la rainure en vé 2 à l'aide d'un système appliquant une tension de quelques dizaines de grammes. Dans le mode de réalisation illustré, ce système comporte deux poulies 27 de renvoi de fils de traction.

Il faut remarquer au passage que la fibre 21 peut être, soit dégainée, soit même revêtue d'un revêtement de quelques microns d'épaisseur, dans la mesure où celui-ci est bien concentrique à la fibre. Or, on sait parfaitement réaliser des fibres revêtues dans de telles conditions en longueur limitée à quelques centaines de mètres, ce qui est suffisant pour constituer un grand nombre de coupleurs. En clair, il est possible de travailler à partir de fibres gainées, ce qui représente un gros avantage dans la fabrication industrielle automatisée, la fibre n'étant pas fragilisée par dégaingnage, et pouvant avoir une durée de vie garantie.

L'encollage de la fibre 21 dans la rainure en vé 2 sera avantageusement réalisé à l'aide de la même résine que la résine de fabrication de la pièce 20, ce qui donne une liaison étroite entre les matériaux. Cette résine, de grande dureté et de faible retrait, sera non chargée, alors que la pièce est chargée, par exemple par des microbilles de silice. Pour avoir un rendement industriel suffisant, on adoptera une résine polymérisant en un temps bref, typiquement 1 à 4 minutes. Naturellement, plusieurs montages du genre illustré en Figure 3 peuvent être placés en parallèle, pour augmenter le rendement. Le remplissage en colle doit être suffisant pour atteindre les extrémités de la résine en vé, comme indiqué en 28 sur la figure 3, et déborder de la rainure dans la partie centrale, comme indiqué en 29.

Le sciage de la pièce et de la fibre pourra être effectué sur une machine automatique (FR-A 8 123 721), avec des gabarits de réception de la pièce. Les plans de sciage ou d'abrasion 30 pourront être parfaitement déterminés dans le montage grâce à des touches ou butées schématisées en 31, 32 et 33 sur les Figures 4A et 4B, s'ajoutant à la touche 26 déjà montrée en Figure 2.

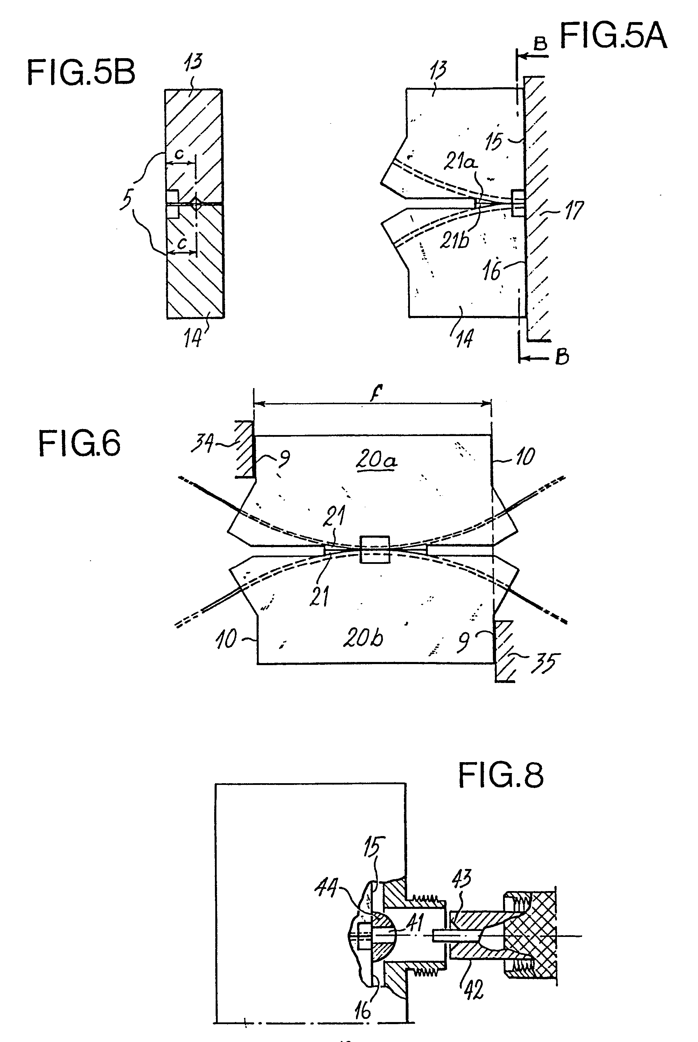

Une fois les sciages effectués, on peut constituer un coupleur à deux branches par mise en vis-à-vis des deux demi-pièces 13 et 14, comme montré en Figures 5A et 5B. Du fait que les deux demi-pièces ont été obtenues par sciage transversal d'une même pièce et que le couplage s'effectue en retournant les deux demi-pièces sur leur plan de référence, on met automatiquement les deux tronçons de fibre 21a et 21b en vis-à-vis: la cote c est garantie par un simple parallélisme de la rainure en vé et de la surface de référence. L'ajustement longitudinal, dont l'influence sur l'efficacité du coupleur est limitée, est simplement réalisé par mise en butée des deux faces sciées 15 et 16 contre un même plan 17 (Figure 5A).

Lorsqu'on souhaite réaliser un coupleur à deux branches vers deux, il n'est pas nécessaire d'effectuer un tronçonnage de la pièce 20 en deux demi-pièces. On accouple alors deux pièces complètes 20a et 20b, comme indiqué sur la Figure 6. Le coupleur est réalisé par mise en butée des faces de référence 9 des deux pièces 20a et 20b sur des butées 34 et 35 dont la distance f est égale à la longueur théorique de chacune des pièces 20a et 20b, à une tolérance de fabrication près. La réalisation de coupleurs satisfaisants implique évidemment une bonne précision et une bonne reproductibilité sur la cote f.

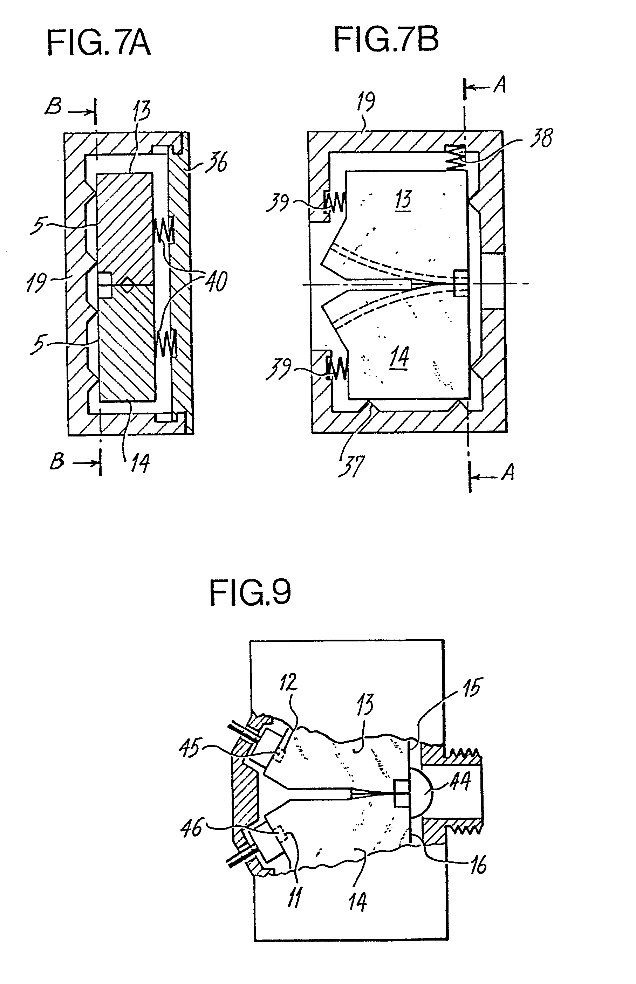

Le coupleur optique ainsi constitué devra être placé dans un boîtier. Les figures 7A et 7B montrent une constitution possible de boîtier destiné à un coupleur à deux branches. Ce boîtier comprend un corps 19 et un couvercle 36. Le boîtier doit appliquer les deux faces sciées des tronçons de fibre l'une contre l'autre. Dans le cas illustré en Figure 7B, cette pression est assurée en plaçant la demi-pièce 14 en appui sur des pions de référence 37 et en interposant un élément élastique 38, schématisé par un ressort sur la Figure 7B, entre la demi-pièce 13 et le corps du boîtier. On pourrait également, dans de nombreux cas, prévoir un élément rigide de pression. Un dispositif similaire doit être prévu pour presser les demi-pièces 13 et 14 sur une face du boîtier pour réaliser le positionnement longitudinal: sur la Figure 7B, le dispositif est similaire au précédent. Il comprend des pions d'appui des demi-pièces 13 et 14 et des éléments élastiques 39, schématisés par des ressorts. Enfin, les demi-pièces sont appliquées sur le fond du corps 19, muni de pions définissant une surface de référence, par un dispositif élastique interposé entre ces demi-pièces et le couvercle 36, schématisés sur la Figure 7A par des ressorts 40.

On réalise ainsi le positionnement latéral des deux faces sciées des fibres à coupler. Ces dispositifs et le boîtier peuvent être de constitution simple, les éléments élastiques étant des ressorts et le boîtier étant en plastique moulé.

Au coupleur montré en Figures 7 peut être intégré un dispositif de branchement de ligne optique, ce qui évite d'avoir à effectuer en séquence la réalisation d'une branche de sortie, puis la connexion, donc améliore le gain par suppression d'un point de connexion et réduit le coût. Dans le cas illustré en Figure 8, le dispositif d'accouplement de la ligne optique comprend une demi-sphère 44 percée d'un trou 41 de réception d'embout de connecteur 42, demi-sphère qui assure le centrage de l'embout de connecteur par appui de sphère sur cône 43. L'accouplement peut être réalisé de façon simple, par exemple par verrouillage à baïonnette ou vissage. La demi-sphère 44 est intégrée, par exemple en la collant sur la face avant du dispositif, constitué par les faces de sciage 15 et 16 (Figure 8). La fixation peut se faire sur un montage permettant un fonctionnement automatique, la sortie du coupleur (Figure 7) étant éclairée pendant que la sphère est ajustée pour que son centre ne s'écarte pas de plus de quelques microns du centre de la surface du coupleur. On peut ainsi optimiser le couplage si on le souhaite et faire varier à volonté le rendement du couplage dans l'une ou l'autre branche du coupleur par simple décalage de la position de la demi-sphère. Le positionnement peut être effectué simplement par des dispositifs bien connus, tels que microscope ou lunette autocolimatrice.

L'intégration d'un dispositif d'accouplement peut s'effectuer à l'aide de dispositifs très variés, et non pas seulement à l'aide de celui de la Figure 8. En fait, on pourra adapter le coupleur suivant l'invention à tous les connecteurs classiquement adoptés, sous la seule réserve que soit interposé un dispositif de référence capable de recevoir l'embout du connecteur et que soit prévu un système de centrage autorisant l'ajustement des performances du coupleur.

Dans la variante de réalisation montrée en Figure 9, le boîtier est prévu pour recevoir deux éléments optoélectroniques 45 et 46 dont le positionnement précis est rendu possible grâce à la présence des éléments de centrage 11 et 12. On obtient ainsi un produit ayant une sortie optique et deux sorties électriques, qui peut aisément être intégré à une ligne complète de transmission par fibre optique.

On peut ainsi réaliser des coupleurs économiques, d'emploi quasi-universel, de faible encombrement puisque l'épaisseur variera typiquement entre 2 et 10 mm. Les rayons de courbure habituels de la rainure, compris entre 30 et 120 mm pour de la fibre 50/125 µm, pourront également être réalisés facilement avec la précision requise. Les mises en forme étant toutes effectuées par sciage, elles sont réalisées beaucoup plus économiquement que par polissage, sans les déformations que provoque la pression de polissage; la rugosité résiduelle est compensée par le liquide d'adaptation d'indice.

**Revendications**

1. Pièce monobloc de réception de fibre optique pour dispositif de couplage, comportant une rainure convexe de réception de fibre ménagée dans une première face de la pièce, dans un premier plan de symétrie, caractérisée en ce que la pièce comporte au moins une surface de référence (6–8 ou 5) parallèle au premier plan de symétrie et une seconde surface de référence (3) plane, non-coplanaire avec la première face, perpendiculaire au premier plan de symétrie et à un second plan de symétrie orthogonal au premier, traversant le second plan de symétrie, d'aire très inférieure à celle de la première face de la pièce et située à proximité de la rainure (2), les surfaces de référence étant susceptibles d'être obtenues par moulage direct de la pièce.

2. Pièce selon la revendication 1, caractérisée en ce que la seconde surface de référence (3) est constituée par le fond d'une encoche prévue dans la première surface de la pièce, à proximité de la zone centrale de la rainure.

3. Pièce selon la revendication 1 ou 2, caractérisée en ce que la rainure a un profil en vé permettant une localisation précise de la fibre.

4. Pièce selon la revendication 1, 2 ou 3, caractérisée en ce qu'elle comporte deux faces de référence supplémentaires (9, 10) symétriques l'une de l'autre par rapport au second plan de symétrie, transversal à la rainure.

5. Pièce selon la revendication 4, caractérisée en ce que lesdites faces de référence supplémentaires sont munies d'éléments de référence symétriques (11, 12) susceptibles d'être obtenues par moulage, permettant de fixer des composants optoélectroniques.

6. Pièce selon l'une quelconque des revendications précédentes, caractérisée en ce qu'elle est en résine à faible retrait chargée en silice.

7. Procédé de réalisation d'un dispositif de couplage, caractérisé en ce qu'on fixe une fibre optique (21) dans la rainure d'une pièce (20) ayant une constitution selon l'une quelconque des revendications 1 à 6, caractérisé en ce qu'on scie la pièce et la fibre dans un plan (30) parallèle à la seconde surface de référence (3), on coupe la pièce par sciage en deux moitiés suivant le second plan de symétrie, et on accole les deux demi-pièces pour mettre les tronçons de fibre avec leur surfaces arasées en vis-à-vis.

8. Procédé de réalisation d'un dispositif de couplage, caractérisé en ce qu'on fixe une fibre optique (21) dans la rainure d'une pièce (20) ayant une constitution selon l'une quelconque des revendications 1 à 6, en ce qu'on arase la pièce et fibre jusqu'à un plan (30) parallèle à la seconde surface de référence (3), et on accouple la surface arasée de ladite pièce à la surface arasée d'une seconde pièce identique.

9. Procédé selon la revendication 7 ou 8, caractérisé en ce qu'on encolle la fibre optique dans la rainure (2) à l'aide d'une résine de liaison et on introduit, entre les tronçons de fibre, un liquide ayant un indice supérieur à celui de l'âme de la fibre lors de l'accouplement.

10. Procédé selon la revendication 7, 8 ou 9, caractérisé en ce qu'on met en place la pièce ou les pièces dans un boîtier muni de moyens d'appui sur au moins la première surface de référence (6-8 ou 5) de la pièce ou des pièces contre des moyens de butée assurant un positionnement précis.

**Patentansprüche**

1. Als einheitlicher Block ausgebildetes Aufnahmestück für optische Fasern für eine Kupplungsvorrichtung mit einer konvexen Nut zur Aufnahme der Fasern, die an einer ersten Seite des Aufnahmestücks in einer ersten Symmetrieebene angebracht ist, dadurch gekennzeichnet, dass das Aufnahmestück wenigstens eine zur ersten Symmetrieebene parallele Bezugfläche (6-8 oder 5) aufweist sowie eine mit der genannten ersten Seite nicht koplanare zweite Bezugsfläche (3), die senkrecht zur ersten Symmetrieebene und einer zur ersten Symmetrieebene orthogonalen zweiten Symmetrieebene verläuft, wobei sie diese zweite Symmetrieebene mit einer Fläche durchdringt, die sehr viel kleiner ist als die der ersten Seite des Aufnahmestücks und in der Nähe der Nut (2) liegt, und wobei die Bezugsflächen durch direkte Anformung an das Aufnahmestück herstellbar sind.

2. Aufnahmestück nach Anspruch 1, dadurch gekennzeichnet, dass die zweite Bezugsfläche (3) von dem Boden einer Aussparung gebildet ist, die in der ersten Seite des Aufnahmestücks in der Nähe des zentralen Bereichs der Nut vorgesehen ist.

3. Aufnahmestück nach Anspruch 1 oder 2, dadurch gekennzeichnet, dass die Nut ein V-förmiges Profil besitzt, das eine präzise Lokalisierung der Faser ermöglicht.

4. Aufnahmestück nach Anspruch 1, 2 oder 3, dadurch gekennzeichnet, dass zwei Hilfs-Bezugsflächen (9, 10) vorgesehen sind, die relativ zu der zweiten, transversal zu der Nut verlaufenden, Symmetriebene zueinander symmetrisch sind.

5. Aufnahmestück nach Anspruch 4, dadurch gekennzeichnet, dass die Hilfs-Bezugsflächen mit symmetrischen Bezugselementen (11, 12) ausgestattet sind, die durch Formspritzen herstellbar sind und die Befestigung von optoelektronischen Komponenten ermöglichen.

6. Aufnahmestück nach einem der vorhergehenden Ansprüche, dadurch gekennzeichnet, dass es aus einem siliziumhaltigen Harz mit niedrigem Schwundwert besteht.

7. Verfahren zur Herstellung einer Kupplungsvorrichtung, bei dem man eine optische Faser (21) in der Nut eines Aufnahmestücks (20) mit einer Struktur nach einem der Ansprüche 1 bis 6 fixiert, dadurch gekennzeichnet, dass man das Aufnahmestück und die Faser in einer parallel zur zweiten Bezugsfläche (3) verlaufenden Ebene (30) durch Sägen trennt, dass man das Aufnahmestück durch einen Sägeschnitt in der zweiten Symmetrieebene in zwei Hälften zerteilt und dass man die beiden Halbstücke derart zusammenkittet, dass die Faserabschnitte mit ihren nachbearbeiteten Flächen einander gegenüberliegen.

8. Verfahren zur Herstellung einer Kupplungsvorrichtung, dadurch gekennzeichnet, dass man eine optische Faser (21) in der Nut eines Aufnahmestücks (20) mit einer Struktur nach einem der Ansprüche 1 bis 6 fixiert und dass man das Aufnahmestück und die Faser bis einer zu einer zu der zweiten Bezugsfläche (3) parallelen Ebene nachbearbeitet, und dass man die nachbearbeitete Fläche des Aufnahmestücks mit der nachbearbeiteten Fläche eines identischen zweiten Aufnahmestücks kuppelt.

9. Verfahren nach Anspruch 7 oder 8, dadurch gekennzeichnet, dass man die optische Faser mit Hilfe eines Kupplungsharzes in die Nut (2) einkittet und dass man bei dem Kuppeln zwischen die Faserabschnitte eine Flüssigkeit einführt, deren Brechungsindex grösser ist als der Brechungsindex des Kerns der Faser.

10. Verfahren nach Anspruch 7, 8 oder 9, dadurch gekennzeichnet, dass man das Aufnahmestück oder die Aufnahmestücke in einem Behälter in Stellung bringt, der Mittel zum Abstützen wenigstens der ersten Bezugsfläche (6-8 oder 5) des Aufnahmestücks oder der Aufnahmestücke gegen Anschlagmittel aufweist, die eine genaue Positionierung sicherstellen.

## Claims

1. One-piece optical fiber reception block for a coupling device, comprising a convex groove for receiving a fiber which is formed in a first face of the block, in a first plane of symmetry, characterized in that the block comprises at least one reference surface (6-8 or 5) parallel to the first plane of symmetry and a second reference surface (3) which is planar, non-coplanar with the first face, orthogonal to the first plane of symmetry and to a second plane of symmetry which is perpendicular to the first, traversing the second plane of symmetry, having an area much smaller than that of the first face of the block and situated in the vicinity of the groove (2), the reference surfaces being possibly obtained by direct molding of the block.

2. Block according to claim 1, characterized in that the second reference surface (3) consists of the bottom of a notch formed within the first face of the block, in the vicinity of the central zone of the groove.

3. Block according to claim 1 or 2, characterized in that the groove has a V-shaped profile for accurate positioning of the fiber.

4. Block according to claim 1, 2 or 3, characterized in that it has two additional reference surfaces (9, 10) mutually symmetrical with respect to the second plane of symmetry, transverse to the groove.

5. Block according to claim 4, characterized in that said additional reference surfaces are formed with symmetrical reference elements (11, 12) which can be obtained by molding, for connection of optoelectronic components.

6. Block according to any one of the preceding claims, characterized in that it is of silica-loaded resine having a low contraction.

7. Process of manufacturing a coupling device, characterized in that an optical fiber (21) is fixed in the groove of the block (20) having a construction according to any one of claims 1-6, characterized in that the block and the fiber are sawed along a plane (30) parallel to the second reference surface (3), the block is sawed into two halves along the second plane of symmetry, and the two halves are superposed to locate the fiber lengths with their flattened surfaces against each other.

8. Process of manufacturing a coupling device, characterized in that an optical fiber (21) is fixed in the groove of a block (20) having a construction according to any one of claims 1-6, the block and fiber are flattened up to a plane (30) parallel to the second reference surface (3), and the flattened surface of the said block is coupled to the flattened surface of a second block identical to the first.

9. Process according to claim 7 or 8, characterized in that the optical fiber is glued in the groove (2) with a bonding resin and a liquid having an optical index higher than that of the core of the fiber is introduced between the fiber length during coupling.

10. Process according to claim 7, 8 or 9, characterized in that the block or blocks is or are located in a housing provided with means for bearing against at least the first reference surface (5-8 or 5) of the block or blocks against abutment means for accurate positioning.

## FIG.1

## FIG.2

FIG.3

FIG.4A

FIG.4B

0 121 460

FIG.5B

FIG.5A

FIG.6

FIG.8

13

# FIG.7A

# FIG.7B

# FIG.9